**Europäisches Patentamt**

**European Patent Office**

**Office européen des brevets**

(19)

(11) Veröffentlichungsnummer: **0 534 211 B1**

(12)
# EUROPÄISCHE PATENTSCHRIFT

(45) Veröffentlichungstag der Patentschrift: **06.12.95**

(21) Anmeldenummer: **92115220.3**

(22) Anmeldetag: **05.09.92**

(51) Int. Cl.6: **C08L 51/04**, //(C08L51/04, 51:04)

(54) **Pfropfkautschuk-Mischung und seine Verwendung zur Herstellung von Formmassen.**

(30) Priorität: **24.09.91 DE 4131729**

(43) Veröffentlichungstag der Anmeldung:
**31.03.93 Patentblatt 93/13**

(45) Bekanntmachung des Hinweises auf die Patenterteilung:
**06.12.95 Patentblatt 95/49**

(84) Benannte Vertragsstaaten:
**BE DE ES FR GB IT NL**

(56) Entgegenhaltungen:
**EP-A- 0 096 412**
**EP-A- 0 450 511**

(73) Patentinhaber: **BASF Aktiengesellschaft**
**Carl-Bosch-Strasse 38**
**D-67063 Ludwigshafen (DE)**

(72) Erfinder: **Niessner, Norbert, Dr.**
**Buhl'scher Hof 10**
**W-6701 Friedelsheim (DE)**
Erfinder: **Seitz, Friedrich, Dr.**
**Von-Wieser-Strasse 1**
**W-6701 Friedelsheim (DE)**

EP 0 534 211 B1

## Beschreibung

Die Erfindung betrifft teilchenförmige Pfropfpolymerisate, die als Weichkomponente für thermoplastische Formmassen geeignet sind.

Die Herstellung teilchenförmiger Pfropfpolymerisate aus einem kautschukelastischen Kern, d.h. einem Polymeren mit einer Glasübergangstemperatur von unter $0°C$, und einer Pfropfhülle, z.B. durch Emulsionspolymerisation ist bekannt. Hierzu wird zunächst durch Emulsionspolymerisation geeigneter Monomerer eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage aufgepfropft wird. Die teilchenförmige Pfropfpolymerisate werden zur Verbesserung der Schlagzähigkeit an sich spröder, schlagempfindlicher Thermoplaste verwendet. Dabei werden die Monomeren für die Pfropfhülle so gewählt, daß diese mit dem zu modifizierenden Thermoplasten verträglich ist, d.h. i.a. aus den gleichen Monomeren aufgebaut ist. Die Herstellung solcher "Schlagzähmodifier" ist bekannt und z.B. in der US-PS 30 55 859 und der DE-PS 12 60 135 beschrieben.

Ein Hauptproblem bei der Herstellung solcher teilchenförmiger Pfropfpolymerisate ist die Anbindung der Pfropfhülle an die Pfropfgrundlage. Bei schlechter Anbindung ist die schlagzähmodifizierende Wirkung nicht ausreichend, so daß nur Produkte mit verminderter Zähigkeit erhalten werden können. Zur Verbesserung der Anbindung wurden eine Reihe von Maßnahmen vorgeschlagen, von denen hier nur die Verwendung "pfropfaktiver" (graft-linking; graft-enhancing) Monomerer bei der Herstellung der Pfropfgrundlage genannt sei (z.B. US-PS 47 64 563, EP-A-231 933).

Nach einer in der EP-A-231 933 gegebenen Definition unterscheiden sich "pfropfaktive" Monomere von "vernetzend wirkenden" (cross-linking) Monomeren dadurch, daß pfropfaktive Monomere zwei oder mehr polymerisierbare Doppelbindungen enthalten, die sich in ihrer Reaktivität bezüglich der Polymerisation deutlich unterscheiden, während die Doppelbindungen vernetzend wirkender Monomerer annähernd gleiche Reaktivität aufweisen. Man weiß jedoch, daß eine solch scharfe Unterscheidung in der Regel nicht möglich ist, weil auch die weniger reaktiven Doppelbindungen der pfropfaktiven Monomeren bereits bei der Herstellung der Pfropfgrundlage teilweise reagieren und damit zu einer erhöhten Vernetzung der Pfropfgrundlage führen. Sie stehen damit für Pfropfreaktionen nicht mehr zur Verfügung.

Andererseits läßt sich der Anteil der pfropfaktiven Monomeren an der Pfropfgrundlage nicht beliebig erhöhen, weil ihre vernetzende Wirkung zu einer Versprödung des als Pfropfgrundlage verwendeten elastomeren Polymerisats führt.

EP 164 048 beschreibt die Verwendung saurer und basischer Monomerer in der Hülle eines Pfropfpolymerisats zur Erzielung matter Oberflächen. Durch diese Methode wird jedoch die Anbindung der Pfropfhülle an die Pfropfgrundlage nicht verbessert.

Mischt man nun die Pfropfpolymeren A mit solchen Pfropfpolymeren B ab, die als Pfropfgrundlage B1 im wesentlichen Polyacrylat enthalten, so wird die Kältezähigkeit der Mischung $A + B$ gegenüber der entsprechenden Wirkung von A weiter verbessert. Außerdem wirken die Polymerisate A als Mattierungsmittel für die aus den Mischungen $A + B$ schließlich hergestellten thermoplastischen Formmassen.

Unmittelbarer Erfindungsgegenstand ist daher eine Pfropfkautschuk-Mischung aus - bezogen auf die Summe aus A und B -

A: 1 bis 99 Gew.-% eines ersten Pfropfkautschuks A aus

A1: 30 bis 80 Gew.-% mindestens eines elastomeren Polymerisats A1 mit einem mittleren Teilchendurchmesser ($d_{50}$) von 50 bis 1000 nm als Pfropfgrundlage aus - bezogen auf A1 -

A11: 85 bis 99,8 Gew.-% mindestens eines Alkylacrylates A11 mit 1 bis 8 Kohlenstoffatomen im Alkylrest,

A12: 0, 1 bis 5 Gew.-% mindestens eines polyfunktionellen, vernetzend wirkenden Monomeren A12 und

A13: 0, 1 bis 10 Gew.-% mindestens eines eine oder mehrere saure Gruppen enthaltenden Monomeren A13,

und

A2: 20 bis 70 Gew.-% einer auf das elastomere Polymerisat A1 aufgepfropften Hülle A2 aus - bezogen auf A2 -

A21: 50 bis 89,9 Gew.-% mindestens eines vinylaromatischen Monomeren A21,

A22: 10 bis 49,9 Gew.-% mindestens eines polaren, copolymerisierbaren, ethylenisch ungesättigten Monomeren A22 und

A23: 0, 1 bis 10 Gew.-% mindestens eines eine oder mehrere basische Gruppen enthaltenden Monomeren A23.

B: 99 bis 1 Gew.-% eines zweiten Pfropfkautschuks B aus

B1: 30 bis 80 Gew.-% eines teilchenförmigen Acrylatkautschuks mit einem mittleren Teilchendurchmesser ($d_{50}$) von 50 bis 1000 nm als Pfropfgrundlage und

B2: 20 bis 70 Gew.-% einer Pfropfhülle aus mindestens einem vinylaromatischen Monomeren und bis zu 50 Gew.-% mindestens eines polaren, copolymerisierbaren, ethylenisch ungesättigten Monmomeren.

Bevorzugt enthält die erfindungsgemäße Mischung die Teilchen A und B im Gewichtsverhältnis 5 : 95 zu 95 : 5. Bevorzugt haben die Pfropfprodukte A die Zusammensetzung 55-70 Gew.-% A1 und 30-45 Gew.-% A2.

Die Bestandteile von A1 und A2 liegen bevorzugt in folgenden Mengenverhältnissen vor:

A11: 92 bis 99,6 Gew.-%
A12: 0,2 bis 4 Gew.-%
A13: 0,2 bis 5 Gew.-%
A21: 65 bis 84,8 Gew.-%
A22: 15 bis 30 Gew.-%
A23: 0,2 bis 5 Gew.-%

Der Vollständigkeit halber sei hinzugefügt, daß für diese Angaben die Monomeren A21 bis A23, die nicht im Wege der Pfropfung mit dem Pfropfkern verbunden, sondern lediglich als okkludierte Polymere eingebaut sind, der Pfropfhülle zugerechnet werden. A21 bis A23 gibt somit die bei der Herstellung zugegebenen Mengen an.

Komponente A

Die teilchenförmigen Pfropfpolymerisate werden aus einer Pfropfgrundlage (Kautschuk) A1 und einer Pfropfhülle A2 in an sich bekannter Weise erhalten. Als Kautschuk A1 dient vernetztes Acrylsäureester-Polymerisat mit einer Glasübergangstemperatur unter 0°C, bevorzugt unter -20°C, besonders bevorzugt unter -30°C (die Glasübergangstemperatur wird z.B. nach der DSC-Methode ermittelt; K.H. Illers, Makromol. Chemie 127 (1969) S. 1). Als Monomere A11 kommen Acrylsäureester mit 1 bis 8 Kohlenstoffatomen, mindestens teilweise solche mit 4 bis 8 Kohlenstoffatomen, im Alkylrest in Betracht. Als geeignet seien besonders Acrylsäure-n-butylester und Acrylsäureethylhexylester genannt. Die Acrylsäureester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäureester-Polymerisat vernetzt ist. Hierzu wird die Polymerisation der Acrylsäureester in Gegenwart von 0,1 bis 5 Gew.-%, vorzugsweise von 0,2 bis 4 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren A12 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat oder Triallylisocyanurat. Als besonders günstiges Vernetzungsmonomeres hat sich der Acrylsäureester des Tricyclodecenylalkohols erwiesen (vgl. DE-PS 12 60 135).

Zur Verbesserung der Anbindung der Pfropfhülle an die Pfropfgrundlage enthält das zur Herstellung der Pfropfgrundlage verwendete Monomerengemisch des weiteren noch 0,1 bis 10 Gew.-%, bevorzugt 0,2 bis 5 Gew.-%, eines oder mehrerer Monomerer, die eine oder mehrere saure Gruppen enthalten (A13). Als saure Gruppen kommen insbesondere Carbonsäure- oder Sulfonsäuregruppen in Frage. Bevorzugte saure Monomere A13 sind alpha, beta-ungesättigte Carbonsäuren wie Acrylsäure oder Methacrylsäure.

Die Herstellung des Pfropfmischpolymerisats kann nach der in der DE-PS 12 60 135 beschriebenen Methode erfolgen. Hierzu wird zunächst die Pfropfgrundlage A1 hergestellt, indem der oder die Acrylsäureester A11, das polyfunktionelle Monomere A12 und das erfindungsgemäße saure Monomere A13 in wäßriger Emulsion bei 20 bis 100°C, bevorzugt zwischen 50 und 80°C polymerisiert. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2 : 1 bis 0,7 : 1 gearbeitet. Als Polymerisationsinitiatoren dienen insbesondere die gebräuchlichen Persulfate, wie z.B. Kaliumperoxodisulfat; es sind jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-%, bezogen auf das Gesamtgewicht der Polymerisationshilfsstoffe eines Molekulargewichtsreglers, wie Mercaptane, Terpinole oder dimeres alpha-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen $d_{50}$-Wert im Bereich von etwa 50 bis 1000 nm, bevorzugt im Bereich von 50 bis 800 nm besitzt.

Pfropfhülle A2:

Zur Herstellung des Pfropfmischpolymerisates aus Kern und Pfropfhülle wird in Gegenwart des erhaltenen Latex A ein Monomerengemisch aus 50 bis 89,9 Gew.-% mindestens eines vinylaromatischen Monomeren A21, 10 bis 49,9 Gew.-% mindestens eines polaren, copolymerisierbaren Monomeren A22 und 0,1 bis 10 Gew.-% mindestens eines basischen Monomeren A23 polymerisiert. Beispiele für vinylaromatische Monomere sind Styrol, alpha-Methylstyrol und kernalkylierte Styrole wie p-Methylstyrol und tert.-Butylstyrol. Besonders bevorzugt werden Styrol, alpha-Methylstyrol und p-Methylstyrol eingesetzt. Beispiele für polare, copolymerisierbare, ethylenisch ungesättigte Monomere A22 sind Acrylnitril, Methacrylnitril, Acrylsäure- und Methacrylsäurealkylester mit 1 bis 4 Kohlenstoffatomen im Alkylrest. Bevorzugt werden Acrylnitril, Methylmethacrylat und Gemische derselben.

Geeignete basische Monomere A23 sind mit A21 und A22 copolymerisierbare Monomere, die mindestens eine basische Gruppe im Molekül enthalten. Bevorzugte Monomere A23 enthalten im Molekül eine tertiäre Aminogruppe. Besonders bevorzugte Monomere sind N-Heterocyclen mit polymerisierbarer Doppelbindung und/oder Ester der Acrylsäure oder Methacrylsäure mit aliphatischen Alkoholen, die im Alkylrest eine tertiäre Aminogruppe enthalten. Als Beispiel seien Dimethylaminoethylacrylat und -methacrylat genannt. Besonders bevorzugte Monomerengemische enthalten 65 bis 84,8 Gew.-% Styrol und/oder alpha-Methylstyrol, 15 bis 30 Gew.-% Acrylnitril und 0,2 bis 5 Gew.-% Dimethylaminoethylacrylat.

Es ist vorteilhaft, die Pfropfmischpolymerisation auf das als Pfropfgrundlage A1 dienende Polymerisat wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung der Pfropfgrundlage A1 verwendeten Emulgatoren bzw. Initiatoren nicht identisch sein. So kann es z.B. zweckmäßig sein, als Initiator für die Herstellung der Pfropfgrundlage A1 ein Persulfat zu verwenden, zur Polymerisation der Pfropfhülle A2 jedoch ein Redoxinitiatorsystem einzusetzen. Im übrigen gilt für die Wahl von Emulgator, Initiator und Polymerisationshilfsstoffen das bei der Herstellung der Pfropfgrundlage A Gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so gesteuert, daß ein Pfropfgrad von 20 bis 70, vorzugsweise 10 bis 45 Gew.-%, und insbesondere von 20 bis 40 Gew.-%, resultiert.

Unter Pfropfgrad wird im Rahmen dieser Erfindung der prozentuale Anteil der in den Pfropfästen des Pfropfmischpolymerisats chemisch gebundenen Monomeren A2, bezogen auf A, verstanden. Der Pfropfgrad läßt sich leicht aus der analytisch bestimmbaren Zusammensetzung des methylethylketonunlöslichen Gels berechnen.

In einer bevorzugten Ausführungsform besteht das Pfropfpolymerisat A aus Teilchen, die einen Durchmesser ($d_{50}$-Wert) zwischen 200 und 1000 nm haben. Gleichzeitig haben dann die Teilchen B bevorzugt einen Durchmesser von 50 bis 200 nm ($d_{50}$-Wert). In einer ebenfalls bevorzugten Ausführungsform besteht das Pfropfpolymerisat B aus Teilchen, die einen Durchmesser ($d_{50}$-Wert) zwischen 200 und 1000 nm haben. Gleichzeitig haben dann die Teilchen A bevorzugt einen Durchmesser von 50 bis 200 nm ($d_{50}$-Wert).Bevorzugt besteht der Bestandteil A aus mindestens 2 unterschiedlich großen Teilchensorten, wobei eine Teilchensorte Durchmesser zwischen 50 bis 200, und die andere zwischen 200 und 1000 nm aufweist ($d_{50}$-Wert).Gleichzeitig kann B aus einer oder mehreren Teilchensorten bestehen.

Andererseits bevorzugt besteht Pfropfpolymerisat B aus mindestens 2 unterschiedlich großen Teilchensorten, wobei eine Teilchensorte Durchmesser zwischen 50 bis 200, und die andere zwischen 200 und 1000 nm aufweist ($d_{50}$-Wert). Gleichzeitig kann A aus einer oder mehreren Teilchensorten bestehen. Die verschiedenen Teilchensorten können sich außerdem durch ihren morphologischen Aufbau (Struktur) unterscheiden.

Pfropfcopolymerisate B

Pfropfcopolymerisate B im Sinne der Erfindung sind insbesondere Emulsionspfropfpolymerisate, gepfropft mit einem Gemisch aus 10 bis 40 Gew.-% Acrylnitril, und 90 bis 60 Gew.-% Styrol auf teilchenförmige, wenigstens partiell vernetzte Alkylacrylatkautschuke einer mittleren Teilchengröße (Gewichtsmittel) von 50 bis 1000 nm. Geeignete Pfropfpolymerisate sind somit Pfropfpolymerisate von Styrol und Acrylnitril auf Acrylatkautschuke, die durch Polymerisation von Acrylsäurealkylestern mit 1 bis 10 Kohlenstoffatomen im Alkylrest, insbesondere Butylacrylat und Ethylhexylacrylat erhalten worden waren. Die als Pfropfgrundlage geeigneten Acrylatkautschuke können Comonomere wie Styrol, Butadien oder Methylmethacrylat in Mengen bis zu 40 Gew.-% einpolymerisiert enthalten. Die als Pfropfgrundlage geeigneten Acrylatkautschuke sind partielle vernetzt; die Vernetzung wird durch radikalische Emulsionspolymerisation entsprechender Monomerengemische in Gegenwart eines copolymerisierbaren, mehrfunktionellen, die Vernetzung bewirkenden Monomeren bewirkt. Geeignete Vernetzungsmonomere sind beispielsweise Divinylbenzol, Diallylmaleat, Diallylfumarat oder Diallylphthalat. Als besonders günstiges Vernetzungsmonomeres hat sich der Acrylsäureester des Tricyclodecenylalkohols erwiesen (vgl. DE-PS 12 60 135) . Die Pfropfpolymerisate enthalten bevorzugt 40 bis 80, insbesondere 50 bis 70 Gew.-%, Acrylatkautschuk.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben Glasübergangstemperaturen über 25°C, bevorzugt über 60°C, besonders bevorzugt über 80°C. Sie werden im folgenden auch als Hartkomponente (Matrix) bezeichnet. Beispiele für geeignete Hartkomponenten sind Polyvinylchlorid, Polymethylmethacrylat sowie insbesondere Copolymere aus einem vinylaromatischen Monomeren und einem polaren, copolymerisierbaren, ethylenisch ungesättigten Monomeren. Geeignete vinylaromatische sowie polare, copolymerisierbare, ethylenisch ungesättigte Monomere sind auch hier die bei der Herstellung der Pfropfhülle als B1 und B2 genannten. Besonders bevorzugte Hartkomponenten sind Styrol-Acrylnitril und alpha-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe enthalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von bis zu 30 Gew.-%, bezogen auf das Gesamtgewicht der thermoplastischen Formmasse, eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit bei guter Qualität der Oberfläche und hoher Witterungs- und Alterungsstabilität gefordert ist. Die erfindungsgemäßen Formmassen weisen gegenüber dem Stand der Technik den weiteren Vorteil auf, daß ihre Zähigkeit in einem weiten Bereich nicht von der Spritztemperatur beeinflußt wird.

Die in der vorliegenden Anmeldung beschriebenen Parameter wurden wie folgt bestimmt:

- Bei der Angabe der mittleren Teilchengröße handelt es sich in allen Fällen um das Gewichtsmittel der Teilchengröße, bestimmt mittels einer analytischen Ultrazentrifuge entsprechend der Methode von W. Scholtan und H. Lange, Kolloid-Z. und Z.-Polymere 250 (1972) Seiten 782 bis 796. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Masseverteilung bezeichnet wird, ist dabei als der Wert definiert, bei dem 50 Gewichtsprozent der Teilchen einen kleineren und 50 Gewichtsprozent der Teilchen einen größeren Durchmesser als der $d_{50}$-Wert aufweisen. Durch Differenzierung der Verteilungskurve wird die Feststellung erleichtert, ob eine oder mehrere Teilchensorten vorliegen. Schließlich kann ein Quotient $Q = (d_{90}-d_{10})/d_{50}$ ermittelt werden, der die Verteilungsbreite wiedergibt, wobei $d_{90}$ und $d_{10}$ den Teilchendurchmesser bedeuten, den mehr als 90 bzw. weniger als 10 % der Teilchen über- bzw. unterschreitet. Besonders bevorzugt sind beispielsweise Mischungen, in denen mindestens einer der Bestandteile A oder B bei der Bestimmung der differentiellen Kurve der Teilchengrössenverteilung in der Ultrazentrifuge mindestens 2 Maxima aufweist.

- Die Kerbschlagzähigkeit [kJ/m²] der Produkte wurde nach DIN 53 453 (entspricht ISO/DIS 179-1980) an gespritzten Normkleinstäben bei 23°C gemessen. Untersucht wurden jeweils drei Probenserien bei drei verschiedenen Spritztemperaturen. Die gefundenen Ergebnisse für die Beispiele sind in Tabelle 1 zusammengefaßt.
- Die Viskositätszahl [cm³/g] wurde an einer 0,5 %igen Lösung in Methylethylketon bestimmt. Gelanteile wurden vor der Messung durch Zentrifugieren entfernt und die Einwaage entsprechend korrigiert.

Der Pfropfgrad der Pfropfpolymerisate A und B wurde ermittelt, indem die Pfropfpolymerisate 48 Stunden mit Methylethylketon extrahiert und der unlösliche Rückstand getrocknet und gewogen wurden. Ein Pfropfgrad von 40 % beispielsweise entspricht einer kovalent gebundenen, nicht extrahierbaren Pfropfhülle, die 40 Gew.-% vom gesamten Pfropfpolymerisat ausmacht.

Die in den Beispielen genannten Teile und Prozente beziehen sich, soweit nicht anders angegeben, auf das Gewicht.

Beispiele (vgl. hierzu die untenstehende Tabelle 1)

Herstellung der Pfropfgrundlage A1 für Pfropfpolymerisat A

Die Herstellung der jeweiligen Pfropfgrundlage erfolgte nach folgender allgemeiner Vorschrift:
160 g des zur Herstellung der Pfropfgrundlage A1 angegebenen Monomerengemisches wurden in 1500 g Wasser unter Zusatz von 5 g des Natriumsalzes einer $C_{12}$- bis $C_{18}$-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der in Tabelle 1 angegebenen Mischung zugegeben. Nach Beendigung der Monomerzugabe wurde die Emulsion noch eine Stunde bei 60°C gehalten. Die mittlere Teilchengröße wurde zu 83 nm ermittelt. Die Teilchengrößenverteilung war eng (Q = 0.28).

Herstellung der teilchenförmigen Pfropfpolymerisate A

2100 g der nach der vorstehenden Vorschrift hergestellten Emulsion wurden mit 1150 g Wasser und 2,7 g Kaliumperoxodisulfat gemischt und unter Rühren auf 65°C erwärmt. Nach Erreichen der Reaktionstemperatur wurden im Lauf von 3 Stunden 560 g des in Tabelle 1 für die Herstellung der Pfropfhülle angegebenen Monomerengemisches zudosiert. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet. Der Pfropfgrad des Pfropfmischpolymerisats betrug 38 %, die Teilchengröße 99 nm.

Herstellung eines grobteiligen Pfropfmischpolymerisats B

Zu einer Vorlage aus 1,5 Teilen des vorstehend beschriebenen Latex B1 wurden nach Zugabe von 50 Teilen Wasser und 0,1 Teilen Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$-$C_{18}$-Paraffinsulfonsäure in 25 Teilen Wasser bei 60°C zugegeben. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt. Die Teilchengrößenverteilung war eng (Q = 0,1).

150 Teile dieses Latex wurden nun mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei der Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mit einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisates wurde zu 35 % ermittelt; die mittlere Teilchengröße der Latexteilchen betrug 510 nm.

Zur Verwendung der erfindungsgemäßen Kautschukdispersionen für thermoplastische Formmassen wurde in Tabelle 1 und 2 als Hartkomponente jeweils ein Styrol/Acrylnitril-Copolymerisat mit einem Acrylnitril-Gehalt von 35 % und einer Viskositätszahl von 80 ml/g verwendet. Die gefällten und getrockneten Pfropfmischpolymerisate wurden auf einem Extruder bei 260°C so mit der Hartkomponente gemischt, daß das resultierende Gemische einen Pfropfpolymerisatanteil von 50 % aufwies. Aus diesem Gemisch wurden durch Spritzguß Formteile hergestellt.

Tabelle 1

| Komponente A Nr. | Pfropfgrundlage A1[1] | | | Pfropfhülle A2[2] | | | Spritztemperatur[3] | Kerbschlag zähigkeit [kJ/m$^2$] gemessen bei | |
|---|---|---|---|---|---|---|---|---|---|
| | BA | DCPA | MAS | S | AN | DMAEA | | 23°C | 0°C |
| 1 | 97 | 2 | 1 | 73 | 25 | 2 | 220°C<br>250°C<br>280°C | 25<br>25<br>22 | 13<br>14<br>12 |
| V[4] | 98 | 2 | - | 75 | 25 | - | 220°C<br>250°C<br>280°C | 6<br>9<br>14 | 3<br>4<br>7 |

[1] Zusammensetzung des zur Herstellung der Pfropfgrundlage A verwendeten Monomerengemisches

[2] Zusammensetzung des zur Herstellung der Pfropfhülle A verwendeten Monomerengemisches

[3] Massetemperatur der thermoplastischen Formmasse beim Spritzguß

[4] Vergleichsversuch entsprechend dem Stand der Technik

BA = Butylacrylat DCPA = Acrylsäureester des Tricyclodecenylalkohols MAS = Methacrylsäure S = Styrol AN = Acrylnitril DMAEA = Dimethylaminoethylacrylat

Tabelle 2

| Angaben der Mengen in Gewichts-%, bezogen auf die Summe von A + B | | | | | |
|---|---|---|---|---|---|
| Komponente A | Komponente B (fein) | Komponente B (grob) | Spritztemperatur[1] [°C] | Kerbschlagzähigkeit [kJ/m$^2$] | |
| | | | | 23°C | 0°C |
| 100 (Vergleich) | - | - | 220<br>250<br>280 | 25<br>25<br>22 | 13<br>14<br>12 |
| -(Vergleich) | 100 | - | 220<br>250<br>280 | 6<br>9<br>14 | 3<br>4<br>7 |
| -(Vergleich) | - | 100 | 220<br>250<br>280 | 26<br>28<br>19 | 5<br>6<br>10 |
| 50 | - | 50 | 220<br>250<br>280 | 29<br>30<br>25 | 14<br>14<br>15 |

[1] Massetemperatur der thermoplastischen Formmasse beim Spritzguß

**Patentansprüche**

1. Pfropfkautschuk-Mischung, aus - bezogen auf die Summe aus A und B -

   A: 1 bis 99 Gew.-% eines ersten Pfropfkautschuks A aus

   A1: 30 bis 80 Gew.-% mindestens eines elastomeren Polymerisats A1 mit einem mittleren Teilchendurchmesser ($d_{50}$) von 50 bis 1000 nm als Pfropfgrundlage aus - bezogen auf A1 -

   A11: 85 bis 99,8 Gew.-% mindestens eines Alkylacrylates A11 mit 1 bis 8 Kohlenstoffatomen im Alkylrest,

   A12: 0,1 bis 5 Gew.-% mindestens eines polyfunktionellen, vernetzend wirkenden Monomeren A12

   und

   A13: 0,1 bis 10 Gew.-% mindestens eines eine oder mehrere saure Gruppen enthaltenden Monomeren A13,

   und

   A2: 20 bis 70 Gew.-% einer auf das elastomere Polymerisat A1 aufgepfropften Hülle A2 aus - bezogen auf A2 -

   A21: 50 bis 89,9 Gew.-% mindestens eines vinylaromatischen Monomeren A21,

   A22: 10 bis 49,9 Gew.-% mindestens eines polaren, copolymerisierbaren, ethylenisch ungesättigten Monomeren A22

   und

   A23: 0,1 bis 10 Gew.-% mindestens eines eine oder mehrere basische Gruppen enthaltenden Monomeren A23;

   B: 99 bis 1 Gew.-% eines zweiten Pfropfkautschuks B aus

   B1: 30 bis 80 Gew.-% eines teilchenförmigen Acrylatkautschuks mit einem mittleren Teilchendurchmesser ($d_{50}$) von 50 bis 1000 nm als Pfropfgrundlage und

   B2: 20 bis 70 Gew.-% einer Pfropfhülle aus mindestens einem vinylaromatischen Monomeren und bis zu 50 Gew.-% mindestens eines polaren, copolymerisierbaren ethylenisch ungesättigten Monomeren.

2. Mischung nach Anspruch 1, dadurch gekennzeichnet, daß die mittlere Teilchengröße ($d_{50}$) der Pfropfgrundlage A1 50 bis 200 nm, und die der Pfropfgrundlage B1 200 bis 1000 nm beträgt.

3. Mischung nach Anspruch 1, dadurch gekennzeichnet, daß die mittlere Teilchengröße ($d_{50}$) der Pfropfgrundlage A1: 200 bis 1000 nm, und die der Pfropfgrundlage B1: 50 bis 200 nm beträgt.

4. Mischung nach Anspruch 1, deren mindestens einer der Bestandteile A oder B bei der Bestimmung der differentiellen Kurve der Teilchengrößenverteilung in der Ultrazentrifuge mindestens 2 Maxima aufweist.

5. Mischung nach Anspruch 1, enthaltend als Monomeres A13 eine alpha, beta-olefinisch ungesättigte Carbonsäure.

6. Mischung nach Anspruch 1, enthaltend als vinylaromatisches Monomer A21 Styrol und/oder alpha-Methylstyrol.

7. Mischung nach Anspruch 1, enthaltend als Monomeres A22 Acrylnitril und/oder Methylmethacrylat.

8. Mischung nach Anspruch 1, enthaltend als Monomeres A23 ein Aminoalkyl(meth)acrylat und/oder einen N-Heterocyclus mit polymerisierbarer C=C-Doppelbindung.

**Claims**

1. A graft rubber mixture composed of, based on the total of A and B,

   A: from 1 to 99% by weight of a first graft rubber A composed of

   A1: from 30 to 80% by weight of at least one elastomeric polymer A1 with a median particle diameter ($d_{50}$) of from 50 to 1000 nm as grafting base composed of, based on A1,

   A11: from 85 to 99.8% by weight of at least one $C_1$-$C_8$-alkyl acrylate A11,

EP 0 534 211 B1

A12: from 0.1 to 5% by weight of at least one polyfunctional crosslinking monomer A12
and
A13: from 0.1 to 10% by weight of at least one monomer A13 containing one or more acidic groups,
and
A2: from 20 to 70% by weight of a shell A2 grafted onto the elastomeric polymer A1 and composed of, based on A2,
A21: from 50 to 89.9% by weight of at least one vinylaromatic monomer A21,
A22: from 10 to 49.9% by weight of at least one polar copolymerizable ethylenically unsaturated monomer A22
and
A23: from 0.1 to 10% by weight of at least one monomer A23 containing one or more basic groups;
B: from 99 to 1% by weight of a second graft rubber B composed of
B1: from 30 to 80% by weight of a particulate polyacrylate rubber with a median particle diameter $(d_{50})$ of from 50 to 1000 nm as grafting base and
B2: from 20 to 70% by weight of a shell composed of at least one vinylaromatic monomer and up to 50% by weight of at least one polar copolymerizable ethylenically unsaturated monomer.

2. A mixture as claimed in claim 1, wherein the median particle size $(d_{50})$ of the grafting base A1 is from 50 to 200 nm, and that of the grafting base B1 is from 200 to 1000 nm.

3. A mixture as claimed in claim 1, wherein the median particle size $(d_{50})$ of the grafting base A1 is from 200 to 1000 nm, and that of the grafting base B1 is from 50 to 200 nm.

4. A mixture as claimed in claim 1, wherein at least one of the components A or B has at least 2 maxima on determination of the differential curve of the particle size distribution in an ultracentrifuge.

5. A mixture as claimed in claim 1, containing an alpha, beta-olefinically unsaturated carboxylic acid as monomer A13.

6. A mixture as claimed in claim 1, containing styrene and/or alpha-methylstyrene as vinylaromatic monomer A21.

7. A mixture as claimed in claim 1, containing acrylonitrile and/or methyl methacrylate as monomer A22.

8. A mixture as claimed in claim 1, containing an aminoalkyl (meth)acrylate and/or a nitrogen heterocycle with a polymerizable C = C double bond as monomer A23.

**Revendications**

1. Mélange de caoutchouc greffé, constitué de - par rapport à la somme de A et de B -
A : 1 à 99 % en poids d'un premier caoutchouc greffé A constitué de
A1 : 30 à 80 % en poids d'au moins un polymère élastomère A1 avec une granulométrie moyenne $(d_{50})$ de 50 à 1.000 nm, en tant que base de greffage constituée de - par rapport à A1 -
A11 : 85 à 99,8 % en poids d'au moins un acrylate d'alkyle A11 avec 1 à 8 atomes de carbone dans le résidu alkyle,
A12 : 0,1 à 5 % en poids d'au moins un monomère A12 polyfonctionnel à action réticulante
et
A13 : 0,1 à 10 % en poids d'au moins un monomère A13 contenant un ou plusieurs groupes acides,
et
A2 : 20 à 70 % en poids d'une enveloppe A2 greffée sur le polymère élastomère A1, constituée de - par rapport à A2 -
A21 : 50 à 89,9 % en poids d'au moins un monomère vinylaromatique A21,
A22 : 10 à 49,9 % en poids d'au moins un monomère A22 polaire, copolymérisable et éthyléniquement insaturé
et

9

A23 : 0,1 à 10 % en poids d'au moins un monomère A23 contenant un ou plusieurs groupes basiques;

B : 99 à 1 % en poids d'un deuxième caoutchouc greffé B constitué de

B1 : 30 à 80 % en poids d'un caoutchouc acrylique particulaire avec une granulométrie moyenne ($d_{50}$) de 50 à 1.000 nm, en tant que base de greffage et

B2 : 20 à 70 % en poids d'une enveloppe de greffage constituée d'au moins un monomère vinylaromatique et jusqu'à 50 % en poids d'au moins un monomère polaire, copolymérisable et éthyléniquement insaturé.

2. Mélange selon la revendication 1, caractérisé en ce que la granulométrie moyenne ($d_{50}$) de la base de greffage A1 vaut de 50 à 200 nm et que celle de la base de greffage B1 vaut de 200 à 1.000 nm.

3. Mélange selon la revendication 1, caractérisé en ce que la granulométrie moyenne ($d_{50}$) de la base de greffage A1 vaut de 200 à 1.000 nm et que celle de la base de greffage B1 vaut de 50 à 200 nm.

4. Mélange selon la revendication 1, dont au moins un des constituants A ou B présente au moins deux maxima lors de la détermination de la courbe différentielle de la distribution granulométrique dans l'ultracentrifugeuse.

5. Mélange selon la revendication 1, contenant en tant que monomère A13 un acide carboxylique oléfiniquement insaturé en position alpha-bêta.

6. Mélange selon la revendication 1, contenant en tant que monomère vinylaromatique A21 du styrène et/ou de l'alpha-méthylstyrène.

7. Mélange selon la revendication 1, contenant en tant que monomère A22 de l'acrylonitrile et/ou du méthacrylate de méthyle.

8. Mélange selon la revendication 1, contenant en tant que monomère A23 un (méth)acrylate d'aminoalkyle et/ou un hétérocycle de l'azote avec une double liaison polymérisable $C = C$.